# NEUE EUROPÄISCHE PATENTSCHRIFT

(11) **EP 0 577 650 B2**
(45) Veröffentlichungstag und Bekanntmachung des Hinweises auf die Entscheidung über den Einspruch: **05.04.2000**
(45) Hinweis auf die Patenterteilung: 17.01.1996
(21) Anmeldenummer: 92906902.9
(22) Anmeldetag: 24.03.1992
(51) Int. Cl.: B41J 2/51, G06K 15/10

(54) **VERFAHREN ZUM AUFZEICHNEN VON INFORMATIONEN**
PROCESS FOR RECORDING INFORMATION
PROCEDE D'ENREGISTREMENT D'INFORMATIONS

(30) Priorität: 28.03.1991 DE 4110776
(43) Veröffentlichungstag der Anmeldung: 12.01.1994
(73) Patentinhaber: EASTMAN KODAK COMPANY, Rochester, New York 14650 (US)
(72) Erfinder: SCHULZ, Harald, D-14050 Berlin (DE); DREES, Friedrich-Wilhelm, D-12203 Berlin (DE)
(74) Vertreter: Pohle, Reinhard, Dipl.-Phys.
(86) Internationale Anmeldenummer: DE9200250
(87) Internationale Veröffentlichungsnummer: WO9217340

(56) Entgegenhaltungen:
- EP-A- 0 387 079
- WO-A-90/14957
- DE-A- 3 806 225
- DE-A- 3 834 709
- JP-A- 61 120 578
- US-A- 4 033 444
- US-A- 4 622 561
- US-A- 4 967 203
- US-A- 4 999 646

## Beschreibung

Bei einem aus der DE-OS 38 34 709 bekannten Verfahren zum Aufzeichnen von Informationen wird ein Druckkopf verwendet, der eine Anzahl in einer Hauptrichtung spaltenförmig angeordneter Druckelemente aufweist. Der Druckkopf wird relativ zu einem Aufzeichnungsträger zeilenweise hin- und herbewegt, wobei seine Bewegungsrichtung senkrecht zu einer Vorschubrichtung des Aufzeichnungsträgers verläuft (serieller Drucker). Bei dieser Hin- und Herbewegung überstreicht der Druckkopf eine Vielzahl von Druckpositionen einer Druckzeile.

Bei dem bekannten Verfahren wird aus einer Teilzahl von Druckelementen eine für alle Druckpositionen einer Druckzeile gleiche Untergruppe gebildet. Gemäß vorgegebener Druckdaten werden an jeder Druckposition die Druckelemente der Untergruppe selektiv angesteuert. Dadurch wird je nach Druckdatum des jeweiligen Druckelements ggf. ein Farbauftrag auf dem Aufzeichnungsträger bewirkt. Nach Überstreichen einer Druckzeile erfährt der Aufzeichnungsträger einen Vorschub, der auf die Länge der Untergruppe in Vorschubrichtung abgestimmt ist. Der Druckkopf kann dann während der nachfolgenden Herbewegung bereits weitere Aufzeichnungen bewirken (bidirektionaler Druck) oder erst bei einer erneuten Hinbewegung (unidirektionaler Druck) Aufzeichnungen bewirken.

Wenn bei seriellen Druckern der Vorschub des Aufzeichnungsträgers nicht exakt der jeweiligen Höhe des zeilenweise gedruckten Musters entspricht, überlappen bei Darstellung zeilenübergreifender, zusammenliegender Farbflächen benachbarte Druckzeilen (dunkle Streifen) oder sind sichtbar beabstandet (helle Streifen). Diese Effekte eines unkorrekten Zeilenabstandes werden nachfolgend Zeilenanschlußfehler genannt.

Beispielsweise verursachen Fertigungstoleranzen beim mechanischen Vorschub des Aufzeichnungsträgers derartige Zeilenanschlußfehler. Außerdem variiert der Betrag des Vorschubs in der Regel mit der Dicke des Aufzeichnungsträgers, so daß bei Aufzeichnungsträgern unterschiedlicher Dicken zur Vermeidung von Zeilenanschlußfehlern eine aufwendige Justage erforderlich wäre.

Ferner kann bei einem mit dem Farbband arbeitenden seriellen Drucker eine ungleichmäßige Farbbandabnutzung (im folgenden Farbbandstrukturfehler genannt) ebenfalls zu Streifenbildungen führen. Auch durch den Ausfall eines Druckelementes können derartige Streifen hervorgerufen werden. Für derartige linienförmig verlaufende und den Eindruck der aufgezeichneten Information störende Strukturen ist das menschliche Auge sehr empfindlich.

Bei dem aus der DE-OS 38 34 709 bekannten Verfahren wird zur Vermeidung heller Streifen zuzüglich zu der durch die Teilzahl bestimmten Untergruppe mindestens ein an die Untergruppe angrenzendes Druckelement jeweils mit demselben Druckdatum beaufschlagt, wie das ihm benachbarte Druckelement der Untergruppe. Bei dem bekannten Verfahren wird damit zwar die Bildung von hellen - besonders augenfälligen - Streifen zwischen anschließenden Druckzeilen in einem weiten Toleranzbereich vermieden, jedoch werden durch die bewußt bewirkte Überlappung benachbarter Druckzeilen dunkle Streifen im Bereich des Zeilenanschlusses in Kauf genommen. Die Wirkung von Farbbandstrukturfehlern und Druckelementausfällen ist mit dem bekannten Verfahren nicht abzuschwächen.

In der internationalen Patentanmeldung WO 90/14957 wird im Zusammenhang mit der Vermeidung einer Wahrnehmung von ungleichmäßigen Seitenkanten eines Aufzeichnungsmusters vorgeschlagen, im bidirektionalen Druck erzeugte Druckzeilen mit ihren einzelnen Drucklinien ineinander verschachtelt anzuordnen. Auch bei diesem bekannten Verfahren bleibt jedoch das Problem von Zeilenanschlußfehlern, Farbbandstrukturfehlern und Fehlern infolge eines Druckelementausfalls bestehen, weil auch hier ggf. auftretende Fehler waagerechte Strukturen verursachen können.

Der Erfindung liegt daher die Aufgabe zugrunde, ein Verfahren zum Aufzeichnen von Informationen zu schaffen, bei dem durch Zeilenanschlußfehler und/oder Farbbandstrukturfehler entstehende streifenförmige Strukturen kaum mehr wahrnehmbar sind.

Diese Aufgabe wird gelöst durch ein Verfahren zum Aufzeichnen von Informationen gemaß vorgegebener Druckdaten mittels eines Druckkopfes mit einer Anzahl von Druckelementen, bei dem der Druckkopf Druckpositionen einer Druckzeile überstreichend hin- und herbewegt wird, bei dem zumindest jeder zur Aufzeichnung vorgesehenen Druckposition einer Druckzeile jeweils eine Untergruppe von Druckelementen zugeordnet wird, wobei die Untergruppen jeweils durch Auswahl einer Teilzahl von Druckelementen gemäß einer druckzeilenindividuellen Bildungsvorgabe derart gebildet werden, daß die den Druckpositionen einer Druckzeile zugeordneten Untergruppen zumindest teilweise aus unterschiedlichen Druckelementen bestehen, und daß die die Größe der Untergruppe festigende Teilzahl von Druckposition zu Druckposition verändert wird, bei dem durch selektive, druckdatengemäße Ansteuerung der Druckelemente der jeweiligen Untergruppe an den Druckpositionen einer Druckzeile eine Druckmusterzeile gebildet wird, und bei dem nach Erzeugung einer Druckmusterzeile ein Vorschub des Aufzeichnungsträgers relativ zu dem Druckkopf erfolgt, wobei zum Anschluß einer nachfolgenden Druckmusterzeile der Vorschub nach der Erstreckung der Untergruppen in Vorschubrichtung bemessen wird und daß der Vorschub auf die kleinste der Teilzahlen abgestimmt wird, und die Bildungsvorgabe für eine nachfolgende Druckzeile zumindest anschlußseitig auf die Bildungsvorgabe der vorhergehenden Druckzeile abgestimmt wird. Unter Erstreckung in Vorschubrichtung ist die Projektion der Ausrichtungslinie der Untergruppe (Länge der Untergruppe zuzüglich einer Teilung zwischen den Druckelementen) auf die Vorschubrichtung zu verstehen; verlaufen Ausrichtungslinie und Vorschubrichtung parallel, entspricht die Erstreckung der Ausrichtungslinie.

Im Zusammenhang mit der vorliegenden Erfindung ist unter Druckkopf ein zur Aufbringung von mosaikförmig zusammengesetzten Mustern geeigneter Aufzeichnungskopf zu verstehen. Dementsprechend werden unter Druckelementen z. B. Aufzeichnungselemente eines Nadeldruckkopfes, eines Tintenstrahldruckkopfes oder eines Thermodruckkopfes verstanden.

Die durch die Bildungsvorgabe definierten Untergruppen variieren bei dem erfindungsgemäßen Verfahren beim Überstreichen der Druckzeile - d. h. zumindest nach einer vorgegebenen Anzahl von Druckpositionen pro Druckzeile. Dadurch sind in vorteilhafter Weise durch Zeilenanschlußfehler, Farbbandstrukturfehler oder Ausfall eines Druckelementes bedingte Streifen je nach Bildungsvorgabe in Vorschubrichtung versetzt. Die nachfolgend erzeugte Druckmusterzeile schließt sich direkt an die vorhergehende Druckmusterzeile an, indem neben dem Vorschub auch deren Bildungsvorgabe auf die Bildungsvorgabe der vorhergehenden Druckzeile anschlußseitig abgestimmt wird. Benachbarte Druckzeilen greifen damit in Art einer Verzahnung ineinander. Bekanntlich ist das menschliche Auge für die Wahrnehmung regelmäßiger Musterstörungen wesentlich empfindlicher als für ungeordnet bzw. versetzt auftretende Störungen. Bei dem erfindungsgemäßen Verfahren werden daher in vorteilhafter Weise die oben erwähnten störenden Streifen der Wahrnehmung entzogen. Bei Aufzeichnung von den Aufzeichnungsträger von der obersten bis zu untersten möglichen Druckzeile bedeckenden Druckzeilenmustern werden die abschließenden Druckzeilenmuster vorzugsweise so ausgebildet, daß jeweils eine gerade obere bzw. untere Abschlußkante gebildet wird.

Ein weiterer Vorteil des erfindungsgemäßen Verfahrens besteht in der Einbeziehung einer Vielzahl, vorzugsweise aller Druckelemente, in den Aufzeichnungsvorgang während einer Druckzeile.

Dadurch wird eine verhältnismäßig gleichförmige und die Aufzeichnungsqualität verbessernde Verteilung der von den Druckelementen abgegebenen Wärme in dem Druckkopf erzeilt.

Eine vorteilhafte Fortbildung des erfindungsgemäßen Verfahrens besteht darin, daß die Bildungsvorgabe für mehrere anschließende Druckzeilen beibehalten wird. Bei konstanter Bildungsvorgabe für eine Anzahl aneinander anschließender Druckzeilen, vorzugsweise für alle Druckzeilen, wird der zur Bildung der Untergruppen erforderliche Steuerungsaufwand äußerst gering gehalten.

Bei einer hinsichtlich der Druckgeschwindigkeit und des Ansteuerungsaufwandes für die Druckelemente vorteilhaften Fortbildung des erfindungsgemäßen Verfahrens ist vorgesehen, daß die Untergruppe von in bezug auf die Vorschubrichtung benachbarten Druckelementen gebildet wird.

Sind die aufzuzeichnenden Informationen größere dunkle oder in Grautönen darzustellende Flächen, ist es vorteilhaft, die Teilzahl der eine Untergruppe bildenden Druckelemente annähernd gleich der halben Anzahl (ca. 50 %) von Druckelementen des Druckkopfes zu wählen. Dann kann nämlich mit dem erfindungsgemäßen Verfahren eine Verteilung ggf. durch Zeilenanschlußfehler, Farbbandstrukturfehler oder Druckelementausfall bedingter Streifen über die gesamte Aufzeichnungsfläche erfolgen. Im Hinblick auf eine möglichst hohe Druckgeschwindigkeit ist es jedoch zumeist ausreichend, wenn die Teilzahl annähernd 90 % der Anzahl von Druckelementen beträgt.

Eine steuerungstechnisch besonders günstige Verteilung der durch Zeilenanschlußfehler, Farbbandstrukturfehler oder Druckelementausfall verursachten Streifen läßt sich dadurch erreichen, daß als Bildungsvorgabe eine Zufallsfunktion verwendet wird. Damit variieren die Untergruppen zufällig, so daß das Auge keine regelmäßigen Strukturen erkennt.

Eine besonders unauffällige Verteilung der Streifen läßt sich gemäß einer weiteren vorteilhaften Fortbildung des erfindungsgemäßen Verfahrens dadurch erreichen, daß benachbarten Druckpositionen einer Druckzeile Untergruppen zugeordnet werden, die sich jeweils zumindest in einem Druckelement unterscheiden. In diesem Fall unterscheidet sich die Lage ggf. auftretender Streifen von Druckposition zu Druckposition einer Druckzeile, so daß für das menschliche Auge überhaupt keine horizontalen Strukturen an benachbarten Druckpositionen mehr erkennbar sind.

Das erfindungsgemäße Verfahren wird im folgenden anhand einer Zeichnung näher erläutert. Es zeigen
Figur 1 eine zur Durchführung des erfindungsgemäßen Verfahrens geeignete Vorrichtung zur Aufzeichnung von Informationen,
Figur 2 eine Einzelheit der Figur 1,
Figur 3 ein mit dem erfindungsgemäßen Verfahren erzeugtes Auszeichnungsmuster,
Figur 4 ein nach einem bekannten Verfahren erzeugtes Muster und
Figur 5 ein nach dem erfindungsgemäßen Verfahren erzeugtes Muster.

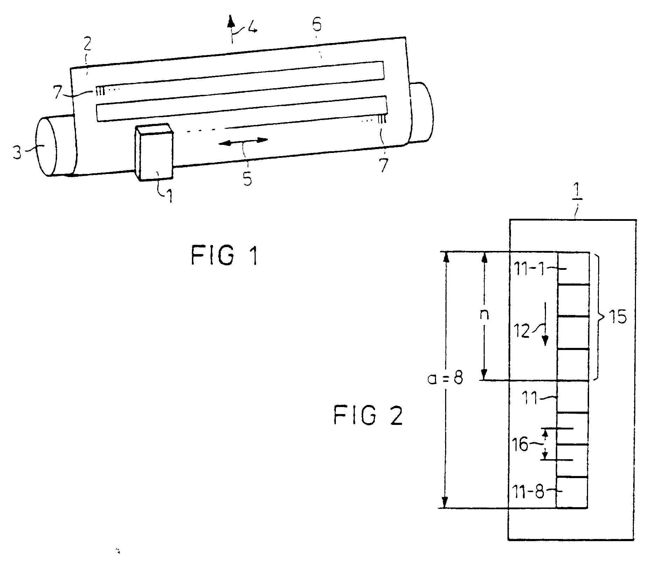

Figur 1 zeigt in schematischer perspektivischer Ansicht die prinzipielle Anordnung eines Druckkopfes 1 gegenüber einem zu bedruckenden Aufzeichnungsträger 2, der an einer Druckwalze 3 anliegend in einer Vorschubrichtung 4 an dem Druckkopf 1 vorbeiführbar ist. Der Druckkopf 1 ist senkrecht zur Vorschubrichtung 4 in Druckzeilenrichtung 5 hin- und herbewegbar. Der Druckkopf 1 überstreicht bei jeder Hin- und Herbewegung eine Vielzahl von Druckpositionen 7. Zum Bedrucken des Aufzeichnungsträgers 2 führt der Druckkopf 1 eine Gesamtrelativbewegung 6 zu dem Aufzeichnungsträger 2 aus.

Figur 2 zeigt den als Tintenstrahldruckkopf ausgebildeten Druckkopf 1 von seiner dem Aufzeichnungsträger 2 zugewandten Seite. Der Druckkopf 1 weist eine Anzahl a = 8 Drucklemente 11-1 bis 11-8 auf. Jedes Druckelement 11 enthält eine Tintenaustrittsdüse und ein nicht gezeigtes Antriebselement, das bei selektiver Druckdatenbeaufschlagung den Austritt eines Tintentröpfchens aus der Tintenaustrittsdüse bewirkt, das beim Auftreffen auf den Aufzeichnungsträger 2 (Figur 1) einen entsprechenden Farbpunkt erzeugt. Die Druckelemente 11 sind entlang einer Hauptrichtung 12 angeordnet. Eine jeweils aus der Anzahl a ausgewählte Teilzahl n von Druckelementen 11 bildet jeweils eine Untergruppe 15; nur die Druckelemente 11 der Untergruppen 15 werden an den Druckpositionen mit Druckdaten beaufschlagt. Nach einer Hinbewegung des Druckkopfes 1 und der Erzeugung einer Druckmusterzeile wird der Aufzeichnungsträger 2 in Vorschubrichtung 4 um einen Betrag weiterbewegt, der der Erstreckung der Untergruppe 15 in Hauptrichtung 12 zuzüglich einer Teilung 16 zwischen zwei Druckelementen 11 entspricht. Anschließend wird der Druckkopf 1 entweder bereits in der Herbewegung (bidirektionaler Druck) oder nach Abschluß der Herbewegung in einer erneuten Hinbewegung wiederum nur im Rahmen der jeweiligen Untergruppen 15 mit Druckdaten beaufschlagt. Von Druckposition zu Druckposition werden jedoch die jeweiligen Untergruppen 15 von zumindest teilweise verschiedenen Druckelementen 11 gebildet.

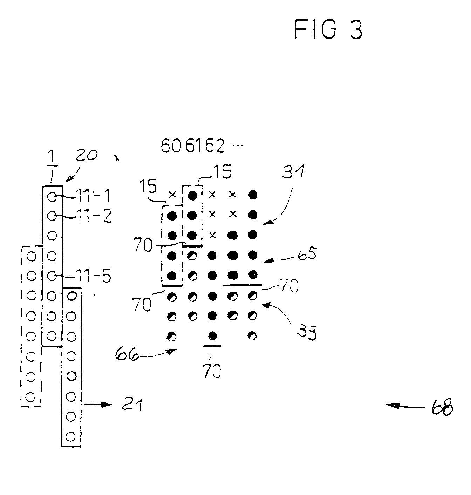

Ein sich dabei ergebendes Aufzeichnungsmuster zeigt Figur 3. Als Aufzeichnungsmuster wird eine durchgängig bedruckte Fläche gewählt. In der Figur 3 sind die Druckelemente 11-1 bis 11-8 des Druckkopfes 1 in einer ersten Position 20 - wie sie dem Aufzeichnungsträger 2 gegenüberstehen - gezeigt. Während der anschließenden Hinbewegung des Druckkopfes 1 in Richtung 21 überstreicht dieser eine erste Druckposition 60. Im Ausführungsbeispiel gemäß Figur 3 beträgt die Teilzahl n = 4 bzw. 3 (Figur 2) wobei die Untergruppe 15 für die Druckposition 60 von vier Druckelementen 11-2 bis 11-5 gebildet ist. Demzufolge werden an der ersten Druckposition 60 vier Punkte gebildet; die übrigen Druckelemente 11-1 und 11-6 bis 11-8 werden nicht angesteuert, da sie gemäß der Bildungsvorgabe für diese Druckzeile nicht zu der der Druckposition 60 zugeordneten Untergruppe 15 gehören. Der Druckkopf 1 wird dann zur nächsten Druckposition 61 bewegt, wobei die Rasterung der Druckpositionen 60, 61 usw. vorzugsweise der Teilung 16 der Druckelemente 11 entspricht. In der zweiten Druckposition 61 wird die Untergruppe 15 gemäß der Bildungsvorgabe nunmehr von den Druckelementen 11-1 bis 11-3 gebildet, so daß an den entsprechenden Positionen Druckpunkte erzeugt werden. Die Erzeugung von Druckpunkten wird auf diese Weise in Bewegungsrichtung 21 fortgesetzt, wobei jeweils drei bzw. vier benachbarte Druckelemente 11 jeweils die Untergruppe 15 bilden. Mit Abschluß der letzten Druckposition einer ersten Druckzeile 65 und nach Erreichen einer Ruheposition ist eine Druckmusterzeile 31 erzeugt; es erfolgt dann ein Vorschub des Aufzeichnungsträgers 2 in Vorschubrichtung 4 (Figur 1) derart, daß der Druckkopf 1 anstatt der Ruheposition 30 nunmehr die Position 32 relativ zu dem Aufzeichnungsträger 2 einnimmt.

In der Figur 3 ist bzw. wird aus Darstellungsgründen eine vollständige Schwärzung der Fläche durch Punkte angedeutet; selbstverständlich können auch Buchstaben o. ä. aufgezeichnet werden, indem die jeweiligen Druckelemente der jeweiligen Untergruppen selektiv mit einem Druckdatum beaufschlagt werden.

Die Untergruppen 15 können in ihrer Zusammensetzung - in bezug auf ihr Zentrum, d. h. ihren Linienschwerpunkt - unter Verwendung einer Zufallsfunktion oder z. B. auch unter Verwendung einer periodischen Funktion als Bildungsvorgabe gebildet werden.

Figur 3 zeigt ein bei dem erfindungsgemäßen Verfahren auftretendes Druckbild. Von Druckposition 60 zu Druckposition 61 usw. bildet jeweils eine unterschiedliche Teilzahl n von Druckelementen 11 eine Untergruppe 15 (Figur 2). Wie bei der Druckposition 60 erkennbar, ist die erste Untergruppe 15 für diese Druckposition 60 von n = 4 Druckelementen 11-2 bis 11-5 gebildet, wogegen die Untergruppe bei der Druckposition 61 lediglich von n = 3 Druckelementen 11-1 bis 11-3 gebildet ist (Hinbewegung entlang einer Druckzeile 65).

Während der Herbewegung zur Erzeugung einer weiteren Druckmusterzeile in einer Druckzeile 66 in Richtung 68 werden von dem Druckkopf 1 die in halb ausgezeichneten Kreisen dargestellten Druckpunkte erzeugt, indem beispielsweise bei der Druckposition 61 nach entsprechendem Vorschub des Aufzeichnungsträgers die Druckelemente 11-1 bis 11-4 angesteuert werden. Der jeweilige Betrag des Vorschubs des Aufzeichnungsträgers ist durch die geringste Anzahl von zusammenhängenden, eine Untergruppe bildenden Druckelementen 11 (vom obersten Druckelement 11-1 an gezählt) bestimmt. Figur 5 zeigt eine äußerst unregelmäßige und daher für das menschliche Auge kaum wahrnehmbare Verteilung der Strukturen 70 infolge von Zeilenanschlußfehlern.

Obwohl im Zusammenhang mit der Figur 3 ein bidirektionaler Druck beschrieben ist, ist das erfindungsgemäße Verfahren selbstverständlich auch im unidirektionalen Druck (Aufzeichnung während der Hin- oder Herbewegung) entsprechend vorteilhaft anwendbar.

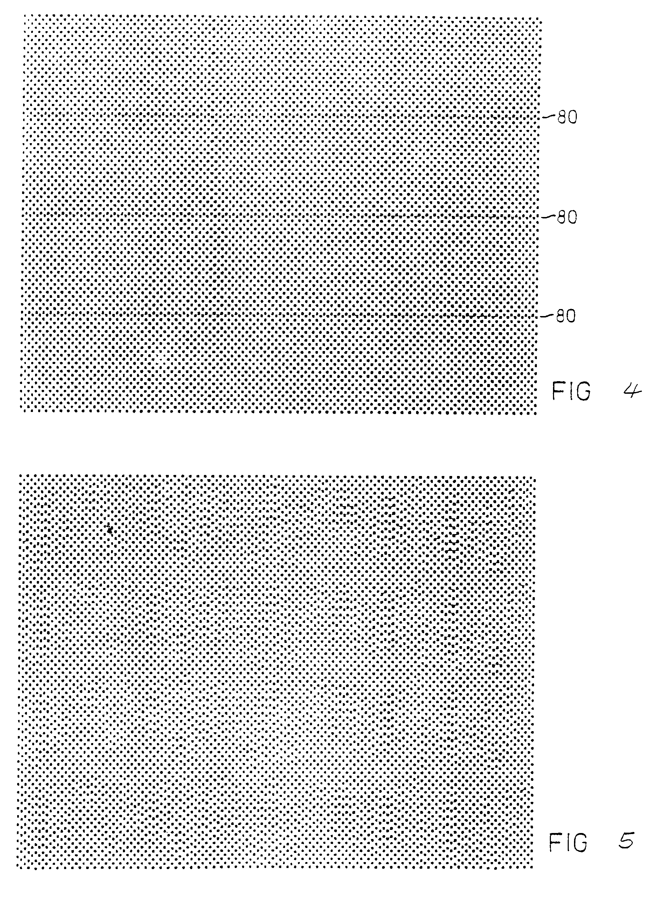

Figur 4 zeigt ein nach dem aus der DE-OS 38 34 709 bekannten Verfahren hergestelltes Muster, wobei ein Druckkopf mit 50 Druckelementen verwendet worden ist. Zu Vergleichszwecken wurden jedoch lediglich 25 Druckelemente angesteuert und ein 50 %iger Graudruck hergestellt, indem nur jedes zweite Druckelement alternierend angesteuert wurde. Das Muster zeigt deutlich dunkle Linien 80, die durch einen negativen Zeilenanschluß von -1,2 % (zu eng bemessener Zeilenabstand) und eine damit verbundene Überlappung der Druckzeilen verursacht sind.

Demgegenüber zeigt die Figur 5 einen ebenfalls mit 25 angesteuerten Druckelementen erzeugten 50 %igen Graudruck, wobei jedoch wie vorstehend ausführlich erläutert die jeweilige Untergruppe von Druckelementen variiert. Figur 5 zeigt eine zufällige Verteilung (als Bildungsvorgabe wurde eine Zufallsfunktion gewählt) der durch Zeilenanschlußfehler verursachten Streifen, für die das menschliche Auge kaum Empfindlichkeit aufweist. Bei Betrachtung der Figuren 4 und 5 ist zu beachten, daß die Muster in erheblicher Vergrößerung dargestellt sind, so daß der Graudruck gemäß Figur 5 bei Originalgröße einen annähernd gleichmäßigen Eindruck hinterläßt, wogegen die Linien 80 gemäß Figur 4 deutlich erkennbar bleiben.

Bei dem erfindungsgemäßen Verfahren schwimmen also die jeweils zu einer Untergruppe gehörenden Druckelemente in Hauptrichtung des Druckkopfes, so daß sich eine vertikale, versetzte Verteilung der durch Zeilenanschlußfehler oder Farbbandstrukturfehler entstehenden Strukturen ergibt. Die sich aneinander anschließenden Druckmuster greifen dabei in Art einer Verzahnung ineinander, so daß insgesamt das menschliche Auge keine regemäßigen störenden Strukturen mehr erkennt.

## Patentansprüche

1. Verfahren zum Aufzeichnen von Informationen gemäß vorgegebener Druckdaten mittels eines Druckkopfes (1) mit einer Anzahl (a) von Druckelementen (11),
- bei dem der Druckkopf (1) Druckpositionen (60, 61, 62) einer Druckzeile (65) überstreichend hin- und herbewegt wird,
- bei dem zumindest jeder zur Aufzeichnung vorgesehenen Druckposition (60, 61, 62) einer Druckzeile (65) jeweils eine Untergruppe (15) von Druckelementen (11) zugeordnet wird, wobei die Untergruppen (15) jeweils durch Auswahl einer Teilzahl (n) von Druckelementen (11-1 ... 11-4) gemäß einer druckzeilenindividuellen Bildungsvorgabe derart gebildet werden, daß die den Druckpositionen (60, 61, 62) einer Druckzeile (65) zugeordneten Untergruppen (15) zumindest teilweise aus unterschiedlichen Druckelementen (11-1 ... 11-4; 11-3 ... 11-6) bestehen, und daß die die Größe der Untergruppe (15) festlegende Teilzahl (n) von Druckposition zu Druckposition verändert wird,
- bei dem durch selektive, druckdatengemäße Ansteuerung der Druckelemente (11) der jeweiligen Untergruppe (15) an den Druckpositionen (60, 61, 62) einer Druckzeile (65) eine Druckmusterzeile (31) gebildet wird und
- bei dem nach Erzeugung einer Druckmusterzeile (31) ein Vorschub des Aufzeichnungsträgers (2) relativ zu dem Druckkopf (1) erfolgt, wobei zum Anschluß einer nachfolgenden Druckmusterzeile (33) der Vorschub nach der Erstreckung der Untergruppen (15) in Vorschubrichtung (4) bemessen wird, und daß der Vorschub auf die kleinste der Teilzahlen (n) abgestimmt wird, und daß die Bildungsvorgabe für eine nachfolgende Druckzeile (66) zumindest anschlußseitig auf die Bildungsvorgabe der vorhergehenden Druckzeile (65) abgestimmt wird.

2. Verfahren nach Anspruch 1, dadurch gekennzeichnet, daß die Bildungsvorgabe für mehrere anschließende Druckzeilen (65, 66) beibehalten wird.

3. Verfahren nach Anspruch 1 oder 2, dadurch gekennzeichnet, daß die Untergruppe (15) von in bezug auf die Vorschubrichtung (4) benachbarten Druckelementen (11-1 bis 11-4) gebildet wird.

4. Verfahren nach einem der Ansprüche 1 bis 3, dadurch gekennzeichnet, daß die Teilzahl (n) annähernd 50 % der Anzahl (a) von Druckelementen (11) beträgt.

5. Verfahren nach einem der Ansprüche 1 bis 4, dadurch gekennzeichnet, daß als Bildungsvorgabe eine periodische Funktion verwendet wird.

6. Verfahren nach einem der Ansprüche 1 bis 4, dadurch gekennzeichnet, daß als Bildungsvorgabe eine Zufallsfunktion verwendet wird.

7. Verfahren nach einem der Ansprüche 1 bis 6, dadurch gekennzeichnet, daß benachbarten Druckpositionen (60, 61) einer Druckzeile (65) Untergruppen (15) zugeordnet werden, die sich jeweils zuminest in einem Druckelement (11-2; 11-5) unterscheiden.

## Claims

1. Method for recording information in accordance with given print data by means of a print head (1) having a number (a) of print elements (11),
- in which said print head (1) is moved back and forth over print positions (60, 61, 62) of a print line (65),
- in which at least every print position (60, 61, 62) of a print line (65) intended for recording is assigned a sub-group (15) of print elements (11), said sub-groups (15) being formed in each case by the selection of a sub-number (n) of print elements (11-1 ... 11-4) in accordance with a formation specification individual to the print line such that said sub-groups (15) associated with said print positions (60, 61, 62) of a print line (65) consist at least partially of different print elements (11-1 ... 11-4; 11-3 ... 11-6), and that the sub-number (n) determining the size of said sub-group (15) is varied from one print position to the other,
- in which by selective, print-data based actuation of said print elements (11) of the respective sub-group (15) a print pattern line (31) is formed at said print positions (60, 61, 62) of a print line (65), and
- in which after generatation of said print pattern line (31) a feed movement of the recording carrier (2) relative to said print head (1) takes place, where for connection of a following print pattern line (33) the feed is dimensioned on the basis of the extent of said sub-groups (15) in the feed direction (4), said feed being matched to the lowest of said sub-numbers (n), and the formation specification for a following print line (66) being matched at least on the connecting side to the formation specification of the previous print line (65).

2. Method according to Claim 1, characterized in that the formation specification for several connecting print lines (65, 66) is retained.

3. Method according to Claim 1 or Claim 2, characterized in that said sub-group (15) is formed by print elements (11-1 to 11-4) adjacent in respect of said feed direction (4).

4. Method according to one of Claims 1 to 3, characterized in that the sub-number (n) is approximately 50% of the number (a) of print elements (11).

5. Method according to one of Claims 1 to 4, characterized in that a periodic function is used as the formation specification.

6. Method according to one of Claims 1 to 4, characterized in that a random function is used as the formation specification.

7. Method according to one of Claims 1 to 6, characterized in that adjacent print positions (60, 61) of a print line (65) are assigned sub-groups (15) that each differ in at least one print element (11-2; 11-5).

## Revendications

1. Procédé d'impression d'informations (préalablement programmées par les données d'impression correspondantes) à l'aide d'une tête d'imprimante (1) comprenant un certain nombre (a) d'éléments d'impression (11)
- selon lequel la tête d'imprimante (1) se déplace sous forme de mouvements de va-et-vient pour balayer les positions d'impression (60, 61, 62) d'une ligne d'impression (65),
- selon lequel au moins un sous-groupe (15) d'éléments d'impression (11) est associé à chaque position d'impression (60, 61, 62) d'une ligne d'impression (65), les sous-groupes (15) étant constitués en choisissant un nombre partiel (n) d'éléments d'impression (11-1 ... 11-4) selon une programmation individuelle pour chaque ligne d'impression de sorte que les sous-groupes (15) associés aux positions d'impression (60, 61, 62) d'une ligne d'impression (65) se composent au moins partiellement d'éléments d'impression différents (11-1 ... 11-4 ; 11-3 ... 11-6), le nombre partiel (n) définissant la taille du sous-groupe varie d'une position d'impression à l'autre
- selon lequel une ligne de structures d'impression (31) est produite par la commande sélective des éléments d'impression (11) du sous-groupe (15) correspondant au niveau des positions d'impression (60, 61, 62) d'une ligne d'impression (65) en fonction des données d'impression et
- selon lequel le support à imprimer (2) avance, après réalisation d'une ligne de structures d'impression (31), par un mouvement relatif par rapport à la tête d'imprimante (1), l'intervalle de l'avance du support étant défini, pour l'alignement de la ligne de structure d'impression suivante (33), en fonction de l'extension des sous-groupes (15) mesurée dans le sens de l'avance (4) et que l'avance est adaptée au plus petit des nombres partiels (n) et en ce que la programmation de l'impression de la ligne suivante (34) est adaptée à la programmation de la ligne d'impression précédente (29) au moins du côté alignement.

2. Procédé selon la revendication 1, caractérisé en ce que la programmation d'impression est maintenue sur plusieurs des lignes d'impression suivantes (65, 66).

3. Procédé selon l'une quelconque des revendications 1 ou 2, caractérisé en ce que le sous-groupe (15) est constitué par des éléments d'impression (11-1 à 11-4) voisins par rapport au sens de l'avance (4).

4. Procédé selon l'une quelconque des revendications 1 à 3, caractérisé en ce que le nombre partiel (n) correspond sensiblement à 50 % du nombre (a) des éléments d'impression (11).

5. Procédé selon l'une quelconque des revendications 1 à 4, caractérisé en ce que la programmation d'impression est celle d'une fonction périodique.

6. Procédé selon l'une quelconque des revendications 1 à 4, caractérisé en ce que la programmation d'impression est celle d'une fonction aléatoire.

7. Procédé selon l'une quelconque des revendications 1 à 6, caractérisé en ce que des sous-groupes (15) sont associés à des positions d'impression voisines (60, 61) d'une ligne d'impression (65), ces sous-groupes se distinguant par au moins un élément d'impression (11-2 ; 11-5).
